# EUROPÄISCHE PATENTANMELDUNG

(11) **EP 1 569 008 A1**
(43) Veröffentlichungstag der Anmeldung: **31.08.2005**
(21) Anmeldenummer: 04090064.9
(22) Anmeldetag: 24.02.2004
(51) Int. Cl.: G01S 11/10

(54) **Verfahren zur räumlichen und zeitlichen Orientierung**

(71) Anmelder: VES Verein für angewandte Evolutionsu Spieltheorie e.V., 12203 Berlin (DE)
(72) Erfinder: Bungenstock, Ulrich, 12203 Berlin (DE)

(57) **Zusammenfassung**

Die Erfindung bezieht sich auf ein Verfahren und Vorrichtungen, die es erlauben, Größe u Richtung des v-Vektors ohne Bezugskörper durch den Rückstoß aus eigener elektro-magnetischer Welle zu messen, und danach durch kontinuierliches Fortschreiben von v-Größe und v-Richtung den jeweiligen Ort und die Ruhlagezeit zu ermitteln. Verfahren und Vorrichtungen nutzen 2 Erscheinungen:
1. Jeder Frequenz entspricht ein konstanter Rückstoß, 2. Durch den Doppler-Effekt wird die Frequenz einer elektro-magnet. Welle proportional zur Größe der Bewegung ihres Senders in v-Richtung höher, in der Gegenrichtung um den gleichen Betrag niedriger: Fig. 1b und 2b. Die Messung der Rückstoßänderung nennt die Größe des v-Vektors. Seine Richtung ist mit der Lage der Verbindungslinie der größten und kleinsten Frequenzänderung identisch. Man kann sie deshalb als Vektorlinie bezeichnen.
Eine Ausführung, die ein-, zwei- und dreidimensional arbeiten kann, zeigt Fig. 2. In einer Kardanaufhängung kann sie in alle Richtungen gedreht werden. Durch Anordnung mehrerer Elemente mit gleichem Mittelpunkt kann sie ohne Drehung in allen Richtungen messen.

Weil das Verfahren erlaubt, die eigene Ruhlage gegenüber dem Raum zu ermitteln, kann man damit Raumbojen als ruhende Bezugspunkte einrichten. Dazu erhalten diese eine Ausgleichssteuerung, die Abdrift durch Beschleunigungseinwirkungen auf die Bojen durch Gegensteuern ausgleicht.

## Beschreibung

**Bezeichnung:** Verfahren zur räumlichen und zeitlichen Orientierung, mit dem ein Körper alle Bewegungskomponenten (Bewegungsgröße, Richtung, Ort, Zeit) ohne Bezug zu anderen Körpern ermitteln kann.

**Aufgabe: Messen** des Geschwindigkeitsvektors **v unabhängig von anderen Bezugskörpern.**

### Lösung:

Für das **Messverfahren** wird der **Rückstoß R** genutzt, den eine elektromagnetische **Welle** auf ihren **Sender** ausübt. **R** entsteht gemäß actio = reactio **unmittelbar am Sender** und ist so groß wie der **Stoß** der Welle.

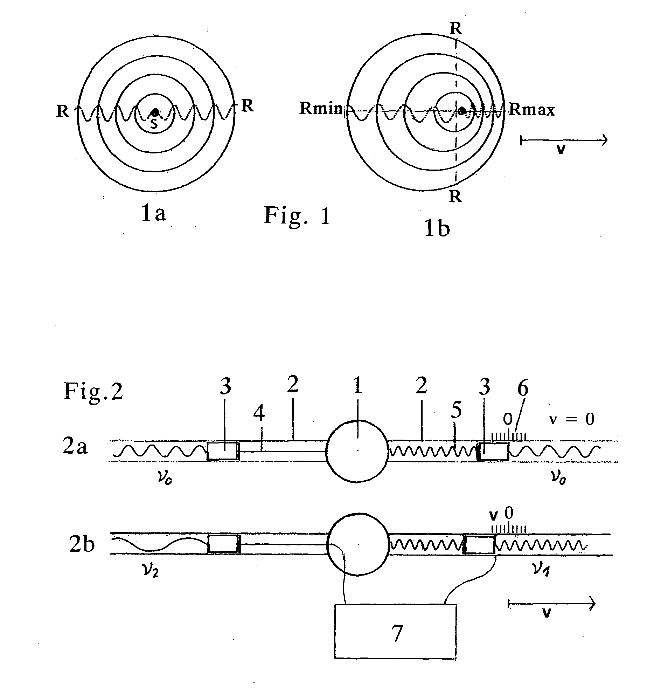

**R** ist **frequenzabhängig**: In der Ruhlage des Senders übt jede Frequenz einen **konstanten** Rückstoß **R** auf den Sender **S** aus. **Fig. 1a** zeigt das an einem Sender, der eine konstante Frequenz als Eigenfrequenz abstrahlt (aus Brockhaus Doppler-Effekt). Hier ist **R** auf den Sender rundum **gleich. Fig. 2a** zeigt dies an 2 entgegen gerichteten Wellen. Bei gleichem **R** beider Wellen weiß der Sender, dass er im Raum ruht. Bei Bewegung ist **R** unterschiedlich, wie es **Fig. 1b** und **2b** zeigen: Hier ändert die Geschwindigkeit **v** durch den **Doppler-Effekt** die Frequenz der Wellen und damit ihren Rückstoß auf den Sender: In **v-Richtung** werden Frequenz und Rückstoß proportional höher, in der Gegenrichtung um den gleichen Betrag niedriger. **Fig. 1b** u **2b** zeigen dies. **Fig. 1b** läßt den kontinuierlichen Übergang vom positiven **R-**maximum zum negativen R-minimum erkennen. Dazwischen liegen senkrecht zur v-Richtung die beiden Stellen mit dem **unveränderten** Rückstoß **R** der Eigenfrequenz. *ν*_{*0*}*.*

Wichtig für das Verfahren ist der **konstante R-Wert** jeder Frequenz. Hat ein Rechner diese und den R-Wert **R** der **Eigenfrequenz** des Senders gespeichert, kann er ohne Rechenvorgang den kontinuierlich aus den Senderbewegungen ihm zufließenden **R**-Werten die v-Werte zuordnen - zusätzlich aus ν₁ = ν_{*0*} (1 +v/c) bzw. -v/c für ν₂ ermitteln.

Die **v-Richtung** ermittelt der Rechner mit Hilfe von **Rmin und Rmax:** Deren **Verbindungslinie** ist mit der **Lage** des v-Vektors identisch, deshalb **Vektorlinie.** Zur Kontrolle steht der Sendermittelpunkt zur Verfügung, durch den die Vektorlinie laufen muß: **Fig. 1b,** in **Fig. 2b** ist es der Kugelmittelpunkt. Außerdem muß beim dreidimensionalen Verfahren die Verbindungslinie der beiden **R**-Punkte der unverändert bleibenden Eigenfrequenz im rechten Winkel die Vektorlinie schneiden. Weiterhin müssen **Rmin** und **Rmax** gleiche Beträge haben, aber umgekehrtes Vorzeichen.

Den **Ort** ermittelt der Rechner durch kontinuierliches Fortschreiben des **v**-Vektors bezogen auf Orte wie **Ausgangs-** u **Zielort**. Das Verfahren erlaubt auch durch im Raum ruhende Raumbojen ein Bezugssystem für alle Bewegungen zu errichten.

**Die Normalzeit** aller Körper, das ist deren **Ruhlagezeit**, ermittelt der Rechner durch Umrechnen der v-verursachten langsameren Eigenzeit mit Hilfe der Lorentz -Funktion für die Zeit.

Charakteristisch für das Verfahren ist die Messung der R-Wirkung **unmittelbar am Sender.** Die zur Verdeutlichung des Verfahrens eingezeichneten Wellenabschnitte täuschen deren Notwendigkeit vor. Tatsächlich ist das Schicksal der Welle **ohne Interesse.** Sie könnte sofort wieder gelöscht werden.

Für das Erkennen der Richtungsänderung bzw. Rotation stehen drei Verfahren zur Verfügung: 1. Kardanische Aufhängung des benutzten Systems. 2. Bei fester Systemanordnung wird die Rotation durch das gleiche Rückstoßverfahren mit extra Sendern gemessen, die senkrecht zu den v-Sendern arbeiten. 3. durch ein bekanntes Rotationsmessgerät.

### Vorrichtung:

**Fig. 2** zeigt eine Vorrichtung in einer mechanischen Ausführung, die ein-, zwei- und dreidimensional verwendet werden kann. **2a** in der Ruhlage, **2b** in Bewegung. Die Vorrichtung besteht aus einer **Kugel 1**, der zwei **Rohre 2** entgegengesetzt angefügt sind.

In jedem Rohr befindet sich ein verschiebbarer **Sender 3.** Im linken Rohr ist der Sender durch einen **Stab 4** mit einem Sensor für **Druckmessung** an der Kugel verbunden, im rechten Rohr mit einer **Spiralfeder 5**. Hier erfolgt die Messung durch **Verschiebung** relativ zu einer **Skala 6.** Weil dieses Rohr transparent ist, kann die Skala, die hier aufgesetzt ist, auf dem Rohr angebracht werden.

Die Vorrichtung kann auf **zweierlei Art** zwei- und dreidimensional genutzt werden: Durch Drehen in einer kardanischen Aufhängung oder durch Anfügen mehrerer Rohrpaare an die Kugel, sodaß der Kugelmittelpunkt zum Ursprung eines Koordinatensystems wird.

Der **Rechner 7,** dem die Messwerte über Funk oder Leitung zugeführt werden, wertet die Messungen für die Berechnung und Anzeige von v-Größe und Richtung, Ort und Zeitangabe aus.

### Raumbojen

Das Verfahren erlaubt das Einrichten von im Weltraum ruhenden Raumbojen. Dazu steuert der **Rechner** einen **Antrieb,** der über **Düsen** gegensteuert, wenn der Rechner eine Bewegung = Abdrift feststellt.

### Stand der Technik

Die **Doppler-Navigation,** wie sie im Brockhaus beschrieben ist, nutzt den Doppler-Effekt, um **v-** Größe und Richtung zu ermitteln und daraus den Augenblicksort zu berechnen. Dieses Verfahren zeigt einerseits die **Realisierbarkeit** des vorbeschriebenen Orientierungsverfahrens, andererseits seine **Neuheit,** weil auch bei der Doppler-Navigation der Körper für seine Informationen einen **Bezug zu anderen Körpern benötigt,** mit den daraus sich ergebenden Nachteilen: Zeitverzögerung durch Hin- und Rückweg, Störungen, Interferenzmessung, starke Senderquelle und vor allem das Angewiesensein auf **andere** Orientierungsquellen als den **eigenen Körper.**

Bedeutsam ist ferner, daß der Rückstoß **R** auch **in einem geschlossenen** Raum entsteht. Es ist keinerlei Außenbezug notwendig.

## Patentansprüche

1. Verfahren zur Bestimmung von Größe und Richtung des Geschwindigkeitsvektors, von Ort und Ruhlagezeit eines Körpers mittels vom Körper abgegebener Strahlung, **dadurch gekennzeichnet, dass** der geschwindigkeitsabhängige Rückstoß der Strahlung auf den Körper gemessen wird.

2. Ein-, zwei- u dreidimensional arbeitende Vorrichtung zur Ausführung des Verfahrens nach Anspruch zu 1.), **dadurch gekennzeichnet, dass** der Rückstoß der Welle auf den Sender durch Druck- oder Verschiebung gemessen wird. Beispiel Fig. 2 in ein-, zwei u dreidimensioneler Ausführung.

3. Vorrichtung zur Ausführung des Verfahrens nach Anspruch 1.) und 2.), **dadurch gekennzeichnet, dass** die Meßgeräte kardanisch gelagert sind.

4. Vorrichtung zur Ausführung des Verfahrens nach Anspruch 1.) - 3.), **dadurch gekennzeichnet, dass** die Rückstoßwirkung einem Rechner zugeleitet wird, der die Signale für die Anzeige von v-Größe und v-Richtung, von Ort und Ruhlagezeit auswertet.

5. Vorrichtung zur Ausführung des Verfahrens nach Anspruch 1.) - 4.), **dadurch gekennzeichnet, dass** Raumbojen mit Hilfe des Verfahrens als ruhende Bezugspunkte eingerichtet werden, indem der Rechner einen Antrieb veranlasst, über Düsen die Boje gegen Abdrifteinflüsse in der Ruhlage zu halten.
